# EUROPEAN PATENT SPECIFICATION

(11) **EP 0 528 790 B1**
(45) Date of publication and mention of the grant of the patent: **10.08.1994**
(21) Application number: 90907847.9
(22) Date of filing: 01.05.1990
(51) Int. Cl.: B29B 9/06, B29C 47/30, B29C 47/92

(54) **VARIABLE OPENING DIE MEANS**
DÜSE MIT VERÄNDERBARER ÖFFNUNG
FILIERE A OUVERTURE VARIABLE

(43) Date of publication of application: 03.03.1993
(73) Proprietor: EXXON CHEMICAL PATENTS INC., Linden, New Jersey 07036-0710 (US)
(72) Inventor: DUGAS, Michael, John, Baton Rouge, LA 70815 (US)
(74) Representative: Veldhuizen, Albert Dirk Willem
(86) International application number: US9002393
(87) International publication number: WO9117034

(56) References cited:
- EP-A- 0 093 358
- EP-A- 0 357 222
- DE-A- 1 454 757
- FR-A- 2 239 337
- US-A- 3 874 835
- US-A- 3 912 439
- US-A- 3 973 890
- US-A- 4 451 414

## Description

### BACKGROUND OF THE INVENTION

### 1. Field of the Invention

The invention pertains generally to a variable opening extruder die face pelletizer for utilization at the outlet of a polymer processing extruder. Apparatus of this general type is typically characterized by die plate means having a plurality of extrusion orifices. Heat-plastified polymeric material is supplied to the die plate means from a polymer processing extruder, typically a drying extruder, and is extruded through the orifices due to the rotating feed screws of the extruder having pressurized the material upstream of the die plate means. The apparatus further includes a rotatable cutter which is disposed downstream of the die plate means. The cutter is generally provided with a plurality of cutting blades projecting radially from a cylindrical body and extending longitudinally therealong. The cutting blades are operatively disposed with respect to the downstream face of the die plate means such that rotation of the cutter causes the heat-softened polymeric material extruded through the orifices to be sheared off into pellets. A treatment fluid introduced downstream of the die plate means carries the dried pellets away from the cutter to the next step in the overall rubber finishing process.

Devices of the foregoing type, as they are presently known in the art, utilize die plate means having adjustable or variable opening extrusion orifices. The predominant type of die plate means possessing the latter feature comprises a pair of concentric hollow cylindrical die plates, one cylindrical die plate being disposed inside the other cylinder die plate. Each of the die plates is provided with a number of extrusion openings. One of the die plates is rotatable with respect to the other of the die plates such that the extrusion openings formed in the respective die plates are capable of being totally aligned, or respectively misaligned to varying degrees. Selective changes in the relative rotational position of the die plates, and the corresponding misalignment of their respective extrusion orifices, in combination with the feed rate of raw material to the extruder, will determine and control the pressure and temperature changes in the polymer drying extruder upstream of the die plates, thereby serving to maintain a substantially constant rate of extrusion for the material. In this manner, the extrusion rate is able to be kept constant by adjusting extrusion back pressure by varying the available die area. Moreover, the die openings are varied in order to control the pressure and temperature in the extruder for the purpose of controlling the extrusion product moisture content. Utilization of relatively rotatable die plates serves further to obtain uniform pellet size by allowing the flow obstruction to occur at the inner face between the die plates, allowing the cross-section of the material at the downstream face of the die, proximate the cutter, to be constant.

Prior art devices as previously characterized possess numerous disadvantages. For instance, the rotatable die cylinder is very difficult to turn, requiring great force and resulting in a short operating life for the die cylinder. Indeed, prior art devices are known to frequently become inoperable after only several weeks of service. Thus, it is necessary to replace worn die plates very often, requiring shutdown of the rubber drying extruders. The latter procedures obviously give rise to costly and time consuming interruptions in the rubber drying process over the operating life of the extruders.

Additionally, the ability of prior art devices to successfully respond to extruder pressure and temperature conditions demands precise adjustments in the relative position of the nested die cylinders. Obtaining the required precision with prior art die plates, however, is extremely difficult and unpredictable. The relative position for the nested cylindrical die plates is typically indicated by appropriate markings on the rotating cylinder. Unfortunately, observation of the indicia is most difficult and, consequently, an accurate determination of the die plate position is rarely attained. Moreover, rubber leakage commonly fills the observation port or indicia viewing area, and it is often impossible to ascertain the true position of the die plates. Furthermore, such precise adjustments involve relatively complex operational mechanical or motorized controls and, hence, are not favorably disposed to manual operation in an industrial environment.

Another significant drawback to prior art devices involves their operating costs. In addition to the above-noted costs, tangible and intangible, which accrue due to the necessity of replacing worn die plates, the two-cylinder die plate system even further increases operating expenses. In particular, foreign matter, such as "tramp" metal, can be expected to enter the extrusion system and plug the extrusion orifices, thereby rendering the die plates inoperable. The latter occurrence necessitates removing the die plates from the extruder system, dismantling the two cylindrical dies and cleaning the extrusion orifices. This protocol not only necessitates detrimental system shut-down, but is also very costly and labor intensive. Furthermore, the cylindrical die plates tend to distort and gall and, therefore, must be similarly dismantled for repair or replacement.

EP-A-0 357 222 discloses an extruder for use with elastomeric material having a die plate with a plurality of orifices extruding from a pressure chamber at the extruder side of the plate to the cutter face. The plate is stationary with respect to the cutter face and the extruder.

As discussed herein, the mechanical and operational deficiencies associated with the concentric rotatable cylindrical die plate arrangement makes accurate adjustment of the die openings ambiguous and, indeed, sometimes impossible. Because the die openings provide the primary control in the extrusion drying process, in terms of responding to extruder conditions, the imprecision in die opening adjustment means that the effectiveness of the primary control is defeated, thereby resulting in the production of a lower quality product.

The present invention addresses and overcomes the foregoing enunciated deficiencies by providing a variable opening extruder die, in the form of an axially movable die rod, which is intended to replace the conventional cylinder-within-a-cylinder design. The die rod requires less force to move than the rotational effort required by prior art die plates. Additionally, position indication for the die rod is susceptible of marked enhancement, in that the die rod is capable of being successfully equipped with an indicator clearly displaying its position. Indeed, a position transmitter may be attached to the die rod to remotely indicate or record its position as, for instance, in a control room. Because the die rod may be hydraulically or electrically powered, standard manual or automatic remote control equipment may be applied for die rod operation and control. Furthermore, a significant attribute of the subject invention is its simplicity. More specifically, the die rod is able to be individually separated from the system without removal of surrounding members from the extruder, thus greatly facilitating repair and maintenance. Finally, the variable opening extrude die of the present invention not only restores primary control capability to the rubber processing system, but can be readily actuated from a control room and, as such, is susceptible to future automation in the rubber drying process.

### BRIEF DESCRIPTION OF THE DRAWINGS

FIG. 1 is a side elevational view of the die means of the present invention;
FIG. 2 is a rear elevational view of the present invention;
FIG. 3 is a top plan view of the present invention;
FIG. 4 is an end view of the present invention;
FIG. 5 is a sectional view of the present invention; and
FIG. 6 is a partial sectional view of the present invention as depicted in Fig. 5 but showing the housing as it appears with the die rod removed therefrom.

### SUMMARY OF THE INVENTION

The present invention is directed to a variable opening die rod for utilization in a polymer drying process, by means of which polymeric extrudate, such as a rubber, is extruded through the die openings or the extrusion orifices formed in the die rod and is presented to a cutting area where it is sheared off and "pelletized". The invention comprises a housing defining an inlet chamber adapted to be disposed downstream of the polymer drying extruder so as to receive the extrudate material. A vertically disposed die means passage is formed in the housing interiorly and downstream of the inlet chamber. A larger, vertically disposed cutter means passage is formed in the housing downstream of the die means passage.

A channel of elongated oblong cross-section is formed in the housing from above a central rear wall of the inlet chamber, and extending transversely through the housing from the inlet chamber to the cutter means passage. A second like channel is similarly formed in the housing below the central rear wall of the inlet chamber in vertical alignment with the upper channel.

A die rod is intended to be disposed in the die means passage. The die rod is provided with upper and lower openings of elongated oblong cross-section, corresponding to and located so as to be aligned longitudinally with the upper and lower channels formed in the housing. The upper and lower openings provided in the die rod each terminate in a rear wall located in the interior of the die rod. Each of the rear walls is provided with a plurality of extrusion orifices which lead to the cutter means passage when the orifices are aligned with the channels formed in the housing.

A cylindrical cutting member is adapted to be disposed within the cutter means passage, being provided with a cutting edge disposed adjacent the upper and lower channels leading from the extrusion orifices. Thus, pressure generated in the extruder chamber by the rotating feed screws of the extruder causes the heat-plastified polymeric extrudate to be presented to the inlet chamber of the housing, and thereafter to be extruded through the extrusion orifices in the die rod and presented to the cutting member. The cutting member is adapted to be rotated such that its cutting edge shears off the extruded material entering the cutter means passage, thereby forming pellets. An air stream is intended to be introduced into the cutter means passage to sweep away the rubber particles and to transport the pellets pneumatically for further processing.

The die rod of the invention is capable of being moved axially, by mechanical, hydraulic or electrical means, within the die means passage for purposes of varying the number of extrusion orifices which are aligned with the upper and lower channels formed in the housing. The die rod thus serves as a variable opening die which is able to be adjusted in response to extruder conditions in order to maintain primary control in the rubber drying process.

### DESCRIPTION OF THE PREFERRED EMBODIMENT

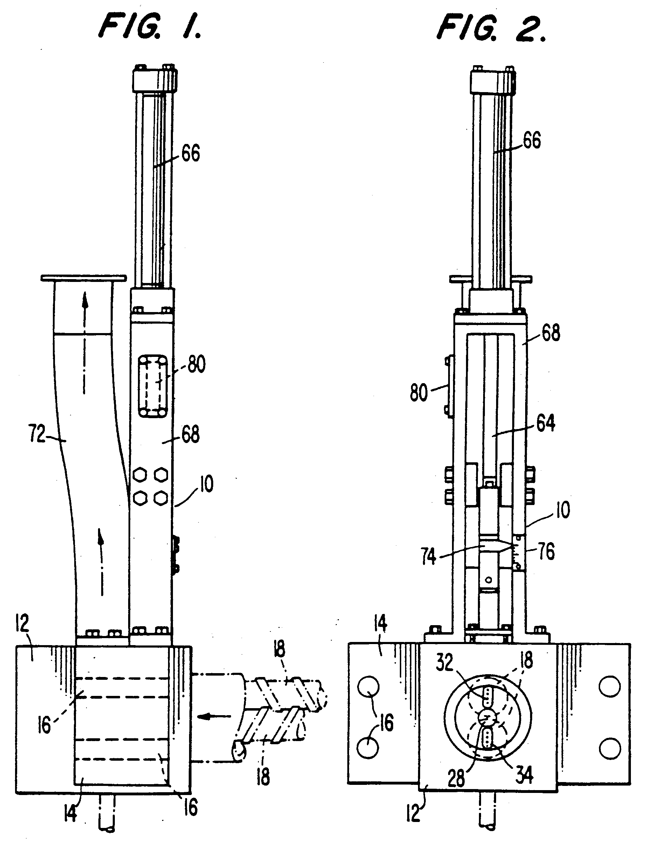

With reference to the drawings and, in particular, with reference to Figs. 1 and 2, the variable opening extruder die means, indicated generally at 10, comprises a lower housing 12 having side extensions 14 provided with through holes 16. The side extensions enable the housing to be associated with the housing of a polymer drying extruder such as a rubber drying extruder, and to be suitably secured to the extruder housing or otherwise by means of securing means associated with the through holes. It should be noted that the rubber drying extruder may be operatively connected to the housing 12 in any acceptable manner and, therefore, the exact configuration for the housing 12 may vary from that depicted herein, depending upon the particular means adopted for securing it to the extruder system. Fig. 1 illustrates the housing as it appears when positioned with respect to a portion of the rubber drying extruder, namely, a pair of extruder feed screws 18, the feed screws 18 being shown in phantom.

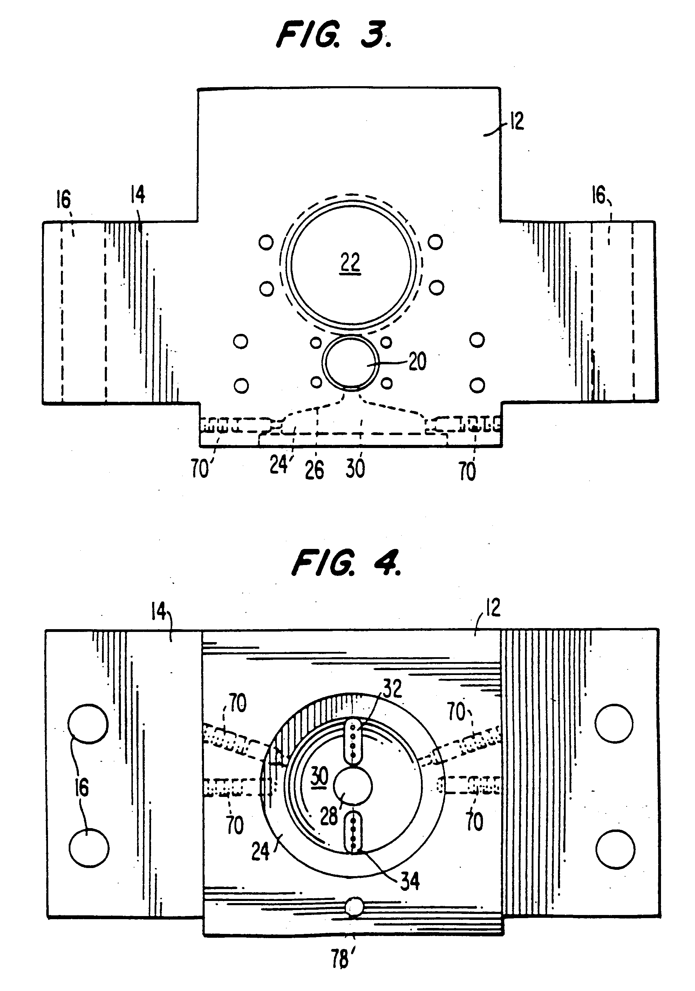

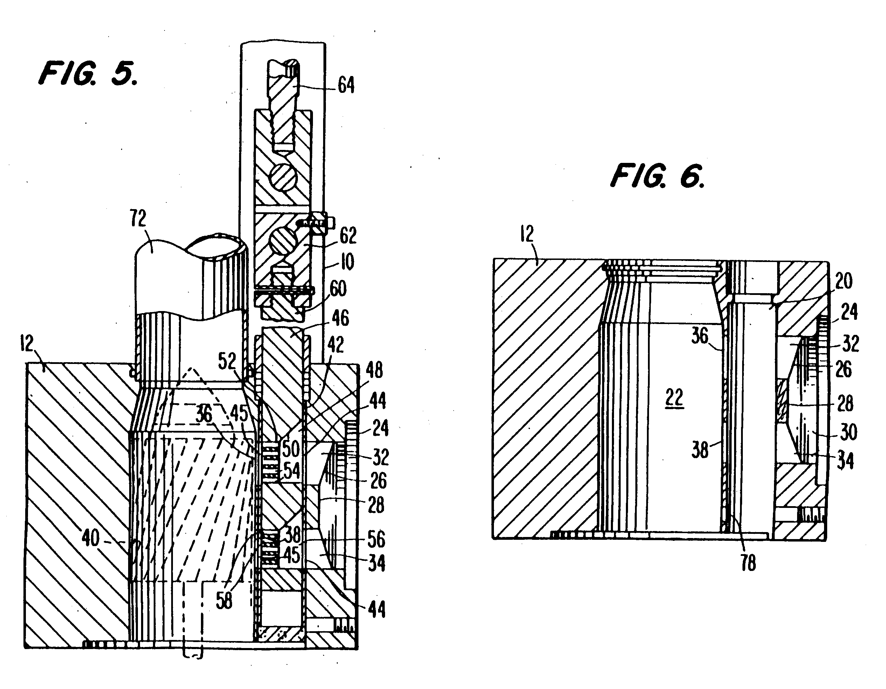

The interior of the housing is best illustrated in Figs. 2, 3, 4 and 6. With particular reference to Figs. 3 and 6, the housing is provided with a generally cylindrical vertically extending die means passage 20 and a larger generally cylindrical vertically extending cutter means passage 22. It can be further seen in connection with Figs. 3, 4 and 6 that the housing is provided at one end with a generally circular inlet opening 24, merging with inwardly tapering wall 26, which tapers to and terminates in a reduced central circular rear wall 28. Opening 24, together with tapering wall 26 and rear wall 28, define an inlet chamber 30 which is adapted to be positioned downstream of the rubber drying extruder, as broadly depicted in Fig. 1, so as to receive heat-plastified polymeric material from the extruder. The aforementioned vertical die means passage 20 is disposed in the housing interiorly of the rear wall 28 of the inlet chamber 30. The vertical cutting means passage 22 is oriented parallel to and is disposed in the housing interiorly of the first passage 20. It should be noted that the housing need not comprise a single piece or component as illustrated herein but may, if desired, comprise several separate pieces or components which, when assembled, form die means and cutter means passages. A first upper channel 32 is formed in the tapered wall 26 of the housing above the circular rear wall 28, transverse to the die and cutter means passages, and extending from the inlet chamber 30 to the die means passage 20, thereby providing communication therebetween. A first lower channel 34 is similarly formed in the tapered wall 26 below the circular rear wall 28, as shown in Fig. 6, with the upper and lower channels 32 and 34 being vertically aligned. Referring to Fig. 4, the cross section of the upper and lower channels 32 and 34 is seen as being of a narrow elongated oblong configuration. Second similarly configured upper and lower elongated oblong channels 36 and 38 are respectively formed in the interior of the housing between the die means and cutter means passages and in longitudinal alignment with channels 32 and 34, so as to provide communication therethrough between the die means and cutter means passages 20, 22 and, hence, between inlet chamber 30 and cutter means passage 22.

The cutter means passage 22 is adapted to receive a cutting member 40, shown in phantom in Fig. 5, having longitudinal edges in the form of cutter blades, and being adapted for rotation about its longitudinal axis within the cutter means passage. As further depicted in Fig. 5, the cutting member is intended to be located within the cutter means passage so that its cutting edge is positioned adjacent to each of the second upper and lower transverse channels 36, 38 which provide communication from the die means passage 20 and from the upstream inlet chamber 30.

A hollow cylindrical tube sleeve 42 is adapted to be disposed within the die means passage 20. This sleeve, as illustrated in Fig. 5, is provided on one side with first upper and lower elongated oblong apertures 44 adapted to be longitudinally aligned with, respectively, the first upper and lower channels 32, 34 formed in the housing. The tube sleeve is provided, on the side directly opposite the first apertures 44, with second upper and lower elongated oblong apertures 45. Apertures 45 are adapted for alignment, longitudinally, with respect to the second upper and lower channels 36, 38 formed in the housing.

A cylindrical die rod 46, best shown in Fig. 5, is provided for insertion into the die means passage 20, within the tube sleeve 42. Although generally solid, the die rod is provided with an upper elongated oblong inlet opening 48 having an upper wall 50 which tapers inwardly and downwardly to an elongated oblong rear wall 52 provided in the interior of the die rod. The rear wall 52 is not continuous, however, being provided with a plurality of transverse upper extrusion orifices 54 extending through the die rod from the rear wall. A second lower tapered inlet opening 56 and lower extrusion orifices 58 are provided in the die rod in the manner previously discussed, spaced from and beneath, but vertically aligned with, the first inlet opening 48 and first orifices 54. The die rod is adapted for orientation within the die means passage of the lower housing, and within the tube sleeve, so that the upper and lower inlet openings 48 and 56 are generally aligned longitudinally with the respective first upper and lower channel 32, 34 formed in the housing between the inlet chamber 30 and the die means passage 20. Similarly, the upper and lower sets of extrusion orifices 54 and 58 are adapted for respective longitudinal alignment with the second upper and lower channels 36 and 38 formed between the die means and cutter means passages 20, 22. It is to be understood that the extrusion orifices 54, 58 can be of many geometrical shapes such as round slots or continuous slots. Hence, communication is adapted to be established from the inlet chamber 30, through the first upper and lower channels 32, 34 through the die rod by means of upper and lower inlet openings 48, 56 and upper and lower sets of extrusion orifices 54, 58, and thereafter through second upper and lower channels 36, 38 to the cutter means passage 22. It can be seen that, in this manner, the hear-softened rubber material which is supplied from the rubber drying extruder to inlet chamber 30 is extruded through the upper and lower sets of extrusion orifices in the die rod due to the pressure generated by the rotating feed screws of the extruder, and is presented to the cutting means disposed in the cutter means passage adjacent the second upper and lower channels 36 and 38 formed in the housing.

The upper end 60 of the die rod is threadedly connected, as depicted in Fig. 5, to the lower end of a rod knuckle member 62. The upper end of the rod knuckle member is, in turn, operatively associated with a ram member 64 of a heavy duty hydraulic cylinder 66. With reference to Figs. 1 and 2, the ram member and cylinder are suitably supported with respect to and above the housing by means of a suitable supporting frame 68.

In operation of the invention, inlet chamber 30, which is disposed directly downstream of the rubber drying extruder, is supplied by the extruder with heat-softened rubber extrudate. Treatment fluid in the form of a liquid or gas may be admitted into the inlet chamber through radial passages 70 formed in the housing in communication with the inlet chamber, as depicted in Figs. 3 and 4. As previously acknowledged, pressure generated in the extruding chamber due to rotation of the extruder feed screws causes the extrudate to be forced into the first upper and lower channels 32, 34 formed in the housing. The extrudate is thereafter forced into the aligned upper and lower inlet openings 48, 56 formed in the die rod, and is extruded through the upper and lower plurality of extrusion orifices 54, 58. The extruded material exits the extrusion orifices and is thence presented through second upper and lower channels 36, 38 to the cutter means passage 22. Because the cutting edge of the rotating cutting member 40 is disposed in the cutter means passage directly adjacent the second upper and lower channels 36, 38, the exiting material is sheared off by the cutting blade of the rotating cutting member and is thus "pelletized". The pelletized rubber is swept away from the cutting member by an air stream introduced into the bottom of the cutter means passage, and is pneumatically transported from the housing through tubing member 72 to subsequent processing and/or packaging stations.

In order to provide a uniform pressure of extrusion, consistent particle size and high-grade product, the die rod 46 is adapted for axial movement within the die means passage 20, by means of the hydraulic ram and cylinder, for purposes of raising or lowering the die rod with respect to the die means passage to vary the number of extrusion orifices which are in alignment with the first and second upper and lower oblong channels formed in the housing. The die rod is thereby capable of varying the number of die openings in communication with the inlet chamber and, correspondingly, with the cutting area, in order to provide a primary control in the extrusion process. The alignment or misalignment of the extrusion orifices, or die holes, is exactly indicated by means of an indicator 74, in conjunction with appropriate indicia 76, provided on the die rod, or elsewhere suitably located. Additionally, vent means 78, in the form of a passage which communicates through the housing between the die means and cutter means passages, is provided for eliminating rubber entrapment in the die means passage by allowing communication between it and the air stream in the cutter means passage. An access port 80 is provided on the support frame to facilitate separating the ram member 64 from the upper end of the rod knuckle member 62.

The die rod, it is to be noted, may, alternatively, be operated manually via a gear arrangement, or may be powered by an electric drive system. The die rod of the present invention requires less force to actuate than that required by the conventional nested cylinder arrangement. Additionally, the die rod has an attached indicator clearly showing its position, and may incorporate a standard position transmitter to indicate or record die rod position remotely from the apparatus. Because the die rod may be hydraulically or electrically powered, and its position transmitted, standard remote manual or automatic control equipment may be applied for controlling its operation. The instant invention also simplifies and reduces the cost of maintenance procedures entailing removal of the die rod, such as might be required to remove foreign materials, such as "tramp" metal, from the extrusion system. In contrast to prior art devices, the die rod of the present invention may be pulled from the remainder of the system without necessitating removal of the housing from the extruder. Moreover, the nested die plates of prior art devices tend to distort and gall, thereby requiring frequent repair and replacement. Elimination of the problematic cylinders in the subject invention consequently reduces maintenance and operating costs. Finally, the ability of the present invention to precisely adjust the die openings affords effective primary control in the extrusion drying process, and lends itself to future automation of the rubber drying process.

## Claims

1. A variable opening extruder die means comprising a housing (12), an inlet chamber (30) formed in said housing (12), said inlet chamber being adapted to receive extrudate material from an extruder means, a die means passage (20) formed said housing (12), said die means passage (20) being disposed in said housing (12) downstream of said inlet chamber (30), a cutter means (40) associated with said die means passage (20) and being disposed downstream of said die means passage (20), at least a first longitudinal channel (32) formed in said housing (12), said channel (32) extending from said inlet chamber (30), through said die means passage (20) and to said cutter means (40), said channel (32) serving to establish communication from said inlet chamber (30) to said cutter means (40), a die rod (46) adapted to be axially disposed in said die means passage (20), a plurality of extrusion orifices (54) formed through said die rod (46), said die rod (46) adapted to be disposed in said die means passage (20) such that said extrusion orifices (54) are aligned longitudinally with said channel (32), whereby said extrudate material is presented to said inlet chamber (30), is extruded through said aligned orifices (54) of said die rod (46) and is presented to said cutter means (40), said die means being characterized by said die rod (46) being capable of axial movement within said die means passage (20) to vary the number of said extrusion orifices (54) which are aligned with said channel and, hence, to vary the number of said extrusion orifices (54) through which said extrudate is extruded and further characterized in said cutter means (40) having a cutting edge adapted to be disposed adjacent to said channel (32).

2. The variable opening extruder die mains of claim 1 wherein said channel (32) has an elongated oblong cross-sectional configuration.

3. The variable opening extruder die means of claim 1 wherein said channel (32) is disposed transverse to said die means passage (20).

4. The variable opening extruder die means of claim 1 wherein said housing (12) is provided with a first longitudinal channel (32) and a second like longitudinal channel (36) vertically aligned with said first channel.

5. The variable opening extruder die means of claim 1 further comprising means for moving said die rod (46), said means for moving being mechanical, electrical or hydraulic.

6. The variable opening extruder die means of claim 1 wherein said die rod (46) is adapted to be moved in response to sensed conditions in said extruder means.

7. The variable opening extruder die means of claim 1 wherein said movement of said die rod (46) is adapted to be remotely controlled.

8. The variable opening extruder die means of claim 1 further comprising a tube sleeve disposed in said die means passage (20) and being adapted to receive said die rod (46).

9. The variable opening extruder die means of claim 1 further comprising a ram member operatively connected to said die rod (46), and a hydraulic cylinder (66) operatively associated with said ram member (64), said hydraulic cylinder (66) and ram member (64) being adapted to move said die rod (46) upwardly or downwardly within said die means passage (20).

10. The variable opening extruder die means of claim 9 further comprising a frame for supporting said hydraulic cylinder and ram member.

11. The variable opening extruder die means of claim 10 wherein said frame is secured to said housing.

## Patentansprüche

1. Extruderdüseneinrichtung mit veränderbarer Öffnung, die ein Gehäuse (12), eine in dem Gehäuse (12) gebildete Einlaßkammer (30), wobei die Einlaßkammer zum Empfangen von Extrudatmaterial aus einer Extrudereinrichtung vorgesehen ist, einen in dem Gehäuse (12) gebildeten Düseneinrichtungsdurchgang (20), wobei der Düseneinrichtungsdurchgang (20) in dem Gehäuse (12) stromabwärts der Einlaßkammer (30) angeordnet ist, eine mit dem Düseneinrichtungsdurchgang (20) verbundene und stromabwärts von dem Düseneinrichtungsdurchgang (20) angeordnete Schneideeinrichtung (40), mindestens einen ersten in dem Gehäuse (12) gebildeten Längskanal (32), wobei sich der Kanal (32) von der Einlaßkammer (30) durch den Düseneinrichtungsdurchgang (20) und zu den Schneideeinrichtungen (40) erstreckt und der Kanal (32) dazu dient, Verbindung zwischen der Einlaßkammer (30) und der Schneideeinrichtung (40) herzustellen, einen Düsenkolben (46), der axial in dem Düseneinrichtungsdurchgang (20) angeordnet ist, mehrere Extrusionsöffnungen (54), die durch den Düsenkolben (46) hindurch gebildet sind, wobei der Düsenkolben (46) in dem Düseneinrichtungsdurchgang (20) so angeordnet ist, daß die Extrusionsöffnungen (54) in Längsrichtung mit dem Kanal (32) fluchten, wodurch das Extrudatmaterial in die Einlaßkammer (30) eingebracht wird, durch die fluchtenden Öffnungen (54) des Düsenkolbens (46) extrudiert wird und der Schneideeinrichtung (40) übergeben wird, wobei die Düseneinrichtung dadurch gekennzeichnet ist, daß der Düsenkolben (46) zu axialer Bewegung in dem Düseneinrichtungsdurchgang (20) in der Lage ist, um die Anzahl der Extrusionsöffnungen (54) zu variieren, die mit dem Kanal fluchten, und so die Anzahl der Extrusionsöffnungen (54) zu variieren, durch die das Extrudat extrudiert wird, und außerdem dadurch gekennzeichnet, daß die Schneideeinrichtungen (40) eine Schneidekante aufweisen, die unmittelbar an dem Kanal (32) angeordnet ist.

2. Extruderdüseneinrichtung mit veränderbarer Öffnung nach Anspruch 1, bei der der Kanal (32) eine Konfiguration mit länglich rechteckigem Querschnitt aufweist.

3. Extruderdüseneinrichtung mit veränderbarer Öffnung nach Anspruch 1, bei der der Kanal (32) quer zu dem Düseneinrichtungsdurchgang (20) angeordnet ist.

4. Extruderdüseneinrichtung mit veränderbarer Öffnung nach Anspruch 1, bei der das Gehäuse (12) mit einem ersten Längskanal (32) und einem zweiten, ähnlichen Längskanal (36), der vertikal mit dem ersten Kanal fluchtet, versehen ist.

5. Extruderdüseneinrichtung mit veränderbarer Öffnung nach Anspruch 1, die außerdem Einrichtungen zum Bewegen des Düsenkolbens (46) umfaßt, wobei die Einrichtungen zum Bewegen mechanisch, elektrisch oder hydraulisch sein können.

6. Extruderdüseneinrichtung mit veränderbarer Öffnung nach Anspruch 1, bei der der Düsenkolben (46) in Reaktion auf gemessene Bedingungen in der Extrudereinrichtung bewegt werden kann.

7. Extruderdüseneinrichtung mit veränderbarer Öffnung nach Anspruch 1, bei der die Bewegung des Düsenkolbens (46) ferngesteuert werden kann.

8. Extruderdüseneinrichtung mit veränderbarer Öffnung nach Anspruch 1, die außerdem eine in dem Düseneinrichtungsdurchgang (20) angeordnete Rohrbuchse umfaßt, welche den Düsenkolben (46) aufnehmen kann.

9. Extruderdüseneinrichtung mit veränderbarer Öffnung nach Anspruch 1, die außerdem ein Kolbenstangenglied (64), das in Wirkbeziehung mit dem Düsenkolben (46) verbunden ist, und einen hydraulischen Zylinder (66), der mit dem Kolbenstangenglied (64) in Wirkbeziehung steht, umfaßt, wobei der hydraulische Zylinder (66) und das Kolbenstangenglied (64) den Düsenkolben (46) in dem Düseneinrichtungsdurchgang (20) in Aufwärtsrichtung oder Abwärtsrichtung bewegen können.

10. Extruderdüseneinrichtung mit veränderbarer Öffnung nach Anspruch 9, die außerdem einen Rahmen zum Tragen des hydraulischen Zylinders und des Stangenglieds umfaßt.

11. Extruderdüseneinrichtung mit veränderbarer Öffnung nach Anspruch 10, bei dem der Rahmen an dem Gehäuse befestigt ist.

## Revendications

1. Moyen à filière d'extrusion à ouverture variable, comprenant un bâti (12), une chambre d'entrée (30) réalisée dans ledit bâti (12), ladite chambre d'entrée étant adaptée à réceptionner de la matière extrudée en provenance d'un moyen à extruder, un passage (20) de moyen à filière étant réalisé dans ledit bâti (12), ledit passage (20) du moyen à filière étant disposé dans ledit bâti (12) en aval de ladite chambre d'entrée (30), un moyen à coupoir (40) associé audit passage (20) de moyen à filière étant disposé en aval dudit passage (20) de moyen à filière, au moins un premier canal longitudinal (32) étant réalisé dans ledit bâti (12), ledit canal (32) partant de ladite chambre d'entrée (30), passant par le passage (20) de moyen à filière et aboutissant audit moyen à coupoir (40), ledit canal (32) servant à établir la communication entre la chambre d'entrée (30) et ledit moyen à coupoir (40), une tige de filière (46) adaptée à être disposée axialement dans ledit passage (20) de moyen à filière, plusieurs orifices d'extrusion (54) étant réalisés dans ladite tige de filière (46), ladite tige de moyen à filière (46) étant adaptée à être disposée dans ledit passage (20) de moyen à filière de façon que lesdits orifices d'extrusion (54) soient alignés longitudinalement avec ledit canal (32), de sorte que ladite matière extrudée arrive dans ladite chambre d'entrée (30), qu'elle est extrudée dans lesdits orifices alignés (54) de ladite tige de filière (46) et qu'elle parvient sur ledit moyen à coupoir (40), ledit moyen à filière étant caractérisé en ce que ladite tige de filière (46) est capable d'un mouvement axial à l'intérieur dudit passage (20) de moyen à filière afin de faire varier le nombre desdits orifices d'extrusion (54) qui sont alignés sur ledit canal et donc de faire varier le nombre desdits orifices d'extrusion (54) par lesquels ladite matière extrudée est extrudée et étant de plus caractérisé en ce que ledit moyen à coupoir (40) comporte un bord de coupe destiné à être disposé adjacent audit canal (32).

2. Moyen à filière d'extrusion à ouverture variable selon la revendication 1, dans lequel ledit canal (32) a une forme oblongue allongée en coupe transversale.

3. Moyen à filière d'extrusion à ouverture variable selon la revendication 1, dans lequel ledit canal (32) est disposé transversalement par rapport audit passage (20) à moyen à filière.

4. Moyen à filière d'extrusion à ouverture variable selon la revendication 1, dans lequel ledit bâti (12) comporte un premier canal longitudinal (32) et un second canal longitudinal analogue (36) aligné verticalement sur ledit premier canal.

5. Moyen à filière d'extrusion à ouverture variable selon la revendication 1, comprenant par ailleurs un moyen pour déplacer ladite tige de filière (46), ledit moyen de déplacement étant mécanique, électrique ou hydraulique.

6. Moyen à filière d'extrusion à ouverture variable selon la revendication 1, dans lequel ladite tige de filière (46) est destinée à être déplacée en réponse à des conditions détectées dans ledit moyen à extruder.

7. Moyen à filière d'extrusion à ouverture variable selon la revendication 1, dans lequel ledit mouvement de ladite tige de filière (46) est destiné à être télécommandé.

8. Moyen à filière d'extrusion à ouverture variable selon la revendication 1, comprenant par ailleurs un manchon en forme de tube disposé dans ledit passage (20) de moyen à filière et destiné à loger ladite tige de filière (46).

9. Moyen à filière d'extrusion à ouverture variable selon la revendication 1, comprenant par ailleurs un élément de piston-plongeur relié fonctionnellement à ladite tige de filière (46), ainsi qu'un cylindre hydraulique (66) associé fonctionnellement audit élément de piston-plongeur (64), ledit cylindre hydraulique (66) et l'élément de piston-plongeur (64) étant destinés à déplacer ladite tige de filière (46) vers le haut ou vers le bas à l'intérieur dudit passage (20) de moyen à filière.

10. Moyen à filière d'extrusion à ouverture variable selon la revendication 9, comprenant par ailleurs un châssis de support dudit cylindre hydraulique et de l'élément de piston-plongeur.

11. Moyen à filière d'extrusion à ouverture variable selon la revendication 10, dans lequel ledit châssis est fixé audit bâti.
